# EUROPÄISCHE PATENTANMELDUNG

(11) **EP 1 365 061 A2**
(43) Veröffentlichungstag der Anmeldung: **26.11.2003**
(21) Anmeldenummer: 03011523.2
(22) Anmeldetag: 21.05.2003
(51) Int. Cl.: D06N 7/00, B32B 5/06, B32B 5/26, D04H 13/00

(54) **Teppichware sowie Verfahren und Vorrichtung zu deren Herstellung**

(30) Priorität: 24.05.2002 DE 10222942
(71) Anmelder: DWS Teppichwerke GmbH, 48477 Hörstel (DE)
(72) Erfinder: Wilkens, Willy, 48477 Hörstel (DE)
(74) Vertreter: Busse, Dietrich, Dipl.-Ing.

(57) **Zusammenfassung**

Bekannte Teppichwaren in Form eines Nadelfilzes bestehen aus einem Grundgewebe und einer mit diesem vernadelten Decklage. Erfindungsgemäß ist als Decklage eine zumindest zwei gemischte Faserstrukturen aufweisende Vlieslage vorgesehen, die als ein ungekrempeltes Zwischenprodukt mit der Decklage vernadelt wird.

## Beschreibung

Die Erfindung betrifft eine Teppichware sowie ein Verfahren und eine Vorrichtung zu deren Herstellung gemäß den Oberbegriffen der Ansprüche 1, 5 bzw. 13.

Bei der Herstellung von Teppichwaren in Form eines Nadelfilzes wird eine auf einem textilen Flächengebilde aufgenadelte Decklage aus Faserflocken vorbereitet. Dieses aus Natur- oder Kunststoffasern bestehende Flockenmaterial wird einer Mischvorrichtung und danach einer Krempelanlage zugeführt, so daß die Faserflocken anschließend als eine gleichmäßige Florlage zur Vernadelung bereitgestellt werden. Entsprechend dieser Vorbearbeitung können zwar unterschiedliche Verteilungen von Fasern einer beispielsweise zweifarbigen Flokkenmischung erreicht werden, jedoch wird durch die gleichmäßige Verteilung der Fasern im Flor auch nur eine weitgehend gleichmäßige Struktur auf dem Nadelfilz sichtbar. Zur Bildung sichtbarer Farbabweichungen und Muster ist deshalb ein zusätzlicher Verfahrensschritt vorgesehen, während dem auf die Florbahn jeweilige farbige Vlieskugeln aufgelegt und diese danach bei der Vernadelung in die Teppichware integriert werden, so daß ein zumindest punktuelle Strukturen aufweisendes Farbmuster gebildet wird. Diese Bemusterung ist jedoch aufwendig, durch ungewollte Häufungen von Vlieskugeln störanfällig und wenig praktikabel.

Die Erfindung befaßt sich mit dem Problem, eine Teppichware sowie ein Verfahren und eine Vorrichtung zu deren Herstellung zu schaffen, wobei mit geringem technischen Aufwand ein in seiner Bemusterung variabel gestaltbares Produkt bereitgestellt wird, dessen optisch ansprechende Decklage auch im Bereich von dessen Gesamteindruck vorteilhaft verbessernden Strukturund/oder Farbunterschieden einen homogenen und verschleißfesten Aufbau des Nadelfilzes ermöglicht.

Die Erfindung löst dieses Problem durch einen Nadelfilz mit den Merkmalen des Anspruchs 1, durch ein Verfahren mit den Merkmalen des Anspruchs 5 sowie durch eine Vorrichtung mit den Merkmalen des Anspruchs 13. Hinsichtlich wesentlicher weiterer Ausgestaltungen wird auf die Ansprüche 2 bis 4 bzw. 6 bis 12 und 14 bis 20 verwiesen.

Die erfindungsgemäße Teppichware in Form eines Nadelfilzes ist mit einer Decklage aus ungekrempeltem Vlies versehen, das in einem nach dem Mischen von Faserstrukturen vorgesehenen Bearbeitungsschritt aus Faserflocken so aufbereitet wird, daß auf der Oberseite der nach dem Nadelvorgang gebildeten Teppichware die gemischten Faserstrukturen als eine teilflächige und fließend unregelmäßige Umrißkontur sichtbar bleiben. Diese Teppichwaren können mit weitgehend beliebig konturierbaren Musterbereichen geschaffen werden, wobei durch eine Auswahl von Schattierungs- und/oder Mustergrößen die optischen Effekte kundenspezifisch variabel ausführbar sind.

Durch die erfindungsgemäße Verfahrensführung wird an Stelle des üblicherweise bei der Nadelfilzherstellung den erforderlichen Flor erzeugenden Krempelvorganges ein einfacherer, steuerbarer Verfahrensschritt zum Auflockern und Ausbreiten der Faserflocken vor dem Nadelvorgang vorgesehen. Die bereits in der Mischphase aufgelockerten und verteilten Faserflocken werden durch einen im Vergleich zum Krempeln weniger intensiven Bearbeitungsschritt zu einer als Flockenverbundvlies ausgebildeten Vliesdecklage verarbeitet, in der die Flokkenstruktur noch weitgehend erhalten bleibt, die Flocken nur eine Ausbreitung erfahren und die Flocken nicht aufgelöst werden.

Dabei wird durch einstellbare Verfahrensparameter eine variabel verteilbare Faserstruktur geschaffen und entsprechend dem am Endprodukt geplanten Schattierungs-Muster der Flockenverbundvlies bereitgestellt. Mit diesem Flokkenverbundvlies wird im anschließenden Verfahrensschritt eine Nadelfilzstruktur mit teilflächigen und fließend unregelmäßiger Umrißkontur aufweisender Musterung erzeugt. Die jeweiligen Schattierungs- oder Farbanteile in den Musterbereichen können durch das Verhältnis der gemischten Faserstrukturen und durch die bei der Bildung des Flockenverbundvlieses wirkenden Verfahrensparameter so variiert werden, daß ein bei der Verlegung des Nadelfilzes optimaler optischer Effekt erreicht wird.

Mit der erfindungsgemäßen Verarbeitungsanlage zur Herstellung der Teppichware wird eine funktionale Einheit geschaffen, die mit geringem technischem Aufwand eine kontinuierliche Aufbereitung der Faserflocken derart ermöglicht, daß diese nach dem Mischen mit wenigen Bearbeitungsschritten in einem Durchlaufverfahren als bahnförmiger Flockenverbundvlies erzeugt und vor dem Nadelvorgang dem Grundgewebe zugeführt werden können.

Weitere Einzelheiten und vorteilhafte Ausgestaltungen ergeben sich aus der nachfolgenden Beschreibung und den Zeichnungen, in der die erfindungsgemäße Teppichware sowie ein Verfahren zu deren Herstellung an Hand einer Verarbeitungsanlage näher veranschaulicht sind. In der Zeichnung zeigen:
- Fig. 1: eine Draufsicht einer Prinzipdarstellung des bahnförmigen Nadelfilzes mit an dessen Oberseite sichtbaren flächigen Musterbereichen,
- Fig. 2: eine Prinzipdarstellung ähnlich Fig. 1 mit einem Querschnitt gemäß einer Linie ll-ll in Fig. 1,
- Fig. 3: eine Prinzipdarstellung einer Verarbeitungsanlage zur Herstellung einer Teppichware im Bereich vor einer Nadelmaschine, und
- Fig. 4: eine vergrößerte Ausschnittsdarstellung der Verarbeitungsanlage gemäß Fig. 3 im Bereich einer das zugeführte Fasermaterial in Form von Faserflocken aufnehmenden Verteilkammer.

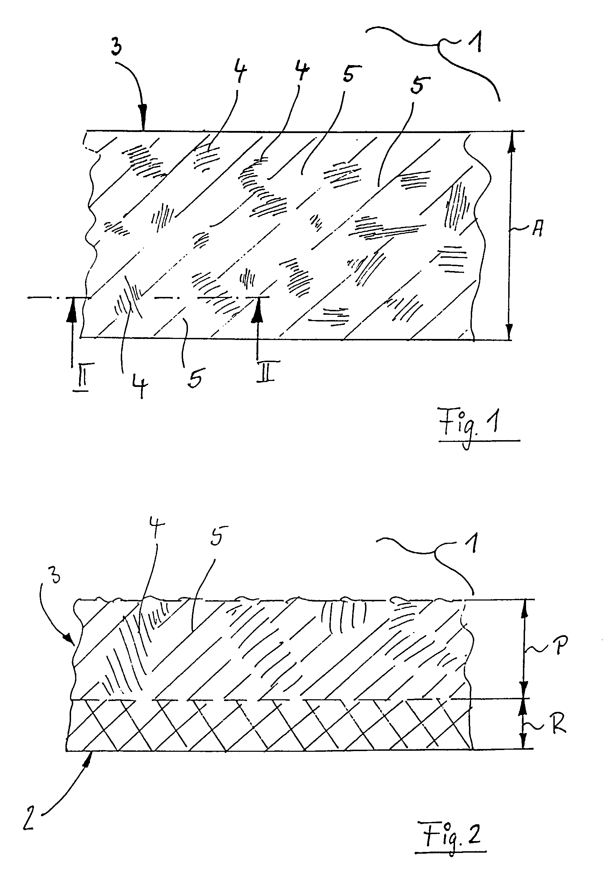

In Fig. 1 ist eine insgesamt mit 1 bezeichnete Teppichware in Form eines eine Bahnbreite A aufweisenden Nadelfilzes dargestellt, dessen im wesentlichen zweilagiger Querschnittsaufbau in Fig. 2 veranschaulicht ist. Die Teppichware 1 besteht aus einem als Rückenmaterial bezeichneten Grundgewebe 2 und einer mit diesem vernadelten Decklage 3. Das als Grundgewebe 3 bezeichnete Rükkenmaterial kann als textiles Flächengebilde auch aus einem Trägervlies o. dgl. bestehen, wobei dieses Grundgewebe 3 eine Dicke R aufweist, die geringer ist als die Höhe P der Decklage 3.

In erfindungsgemäßer Ausführung ist die Decklage 3 aus einer ungekrempelten Vlieslage gebildet, die aus zumindest zwei (durch unterschiedliche Schraffur verdeutlichten) Faserstrukturen 4, 5 so gemischt ist, daß die in den Darstellungen gemäß Fig. 1 und 2 durch unregelmäßig dicht verteilte Schraffurlinien verdeutlichten Musterbereiche als flächige Konturen sichtbar sind.

Die Faserstrukturen 4, 5 sind jeweils als Flächenteile mit fließend unregelmäßiger Umrißkontur oberseitig sichtbar in die Nadelfilz-Decklage 3 vollständig integriert und erstrecken sich auch in der Höhe P (Schnittebene, Fig. 2) bis in den Bereich des Grundgewebes 3. Damit weist die Teppichware 1 zumindest zwei als unterschiedliche Schattierungen sichtbare Musterbereiche (enge Schraffur: Struktur 4, weite Schraffur: Struktur 5) nach Art einer (farbigen) Fleckenverteilung auf, die bisher vergleichsweise nur durch eine Bedruckung von Geweben mit unterschiedlichen Farbmustern erreichbar ist.

Die Musterbereiche in der Teppichware 1 können dabei auch aus mehr als den zwei dargestellten Faserstrukturen 4, 5 gebildet sein, wozu insbesondere jeweilige Fasern unterschiedlicher Farbe gemischt und so kombiniert werden, daß kundenspezifische Farbvorstellungen individuell erfüllt sind. Denkbar ist dabei auch, daß bereits bei gleicher Farbe der beiden gemischten Faserstrukturen 4, 5 der vorbeschriebene Schattierungs-Effekt erreicht wird. Dazu können die beiden gleichfarbigen Faserstrukturen 4, 5 beispielsweise aus unterschiedlich vorbearbeiteten Fasern bestehen, diese unterschiedliche Dicke, Länge und/oder Dichte aufweisen oder auch Kunststoff- und/oder Naturfasern gemischt werden, so daß sich damit am Endprodukt die Musterbereiche ergeben. Diese Musterbereiche bilden in der Teppichware dezent fließende, kanten- und linienfreie Übergänge, so daß insbesondere erst in der Verlegestellung der Teppichware 1 durch unterschiedliche Lichtverhältnisse in den Verlegeräumen die flächigen Verteilungen mit ihren optisch ansprechenden Gesamtbild optimal hervortreten.

Die vorbeschriebene, erfindungsgemäße Teppichware 1 kann mit den üblicherweise bei der Herstellung von Nadelfilz vorgesehenen Verfahrensschritten nicht erzeugt werden, da diese bekannten Techniken von der Herstellung eines Flores ausgehen, der zwar aus einer Mischervorrichtung zugeführte Fasern aufweist, diese werden jedoch nach dem Mischen mittels einer Krempelmaschine zu einer Flor-Bahn mit weitgehend homogener Verteilung sämtlicher Bestandteile verarbeitet. Dieser gleichmäßige Flor weist vollständig verzogene, parallelisierte und ausgebreitete Fasern auf, so daß in diesem Flor eine Faserflocken-Strukur gerade nicht mehr enthalten ist. Die bei diesen bekannten HerstellungsVerfahren aus der Krempel-Maschine zur Vernadelung entnommene Flor-Decklage kann ebenfalls aus zwei oder mehr gemischten Faserstrukturen bestehen. Diese werden mit dem textilen Flächengebilde in Form des Grundgewebes 2, einem nicht dargestellten Trägervlies o. dgl. durch eine vertikal zur Vorschubebene des Grundgewebes 2 erfolgende Nadelbearbeitung zu den Teppichwaren mit bekanntem Vliesmuster verbunden.

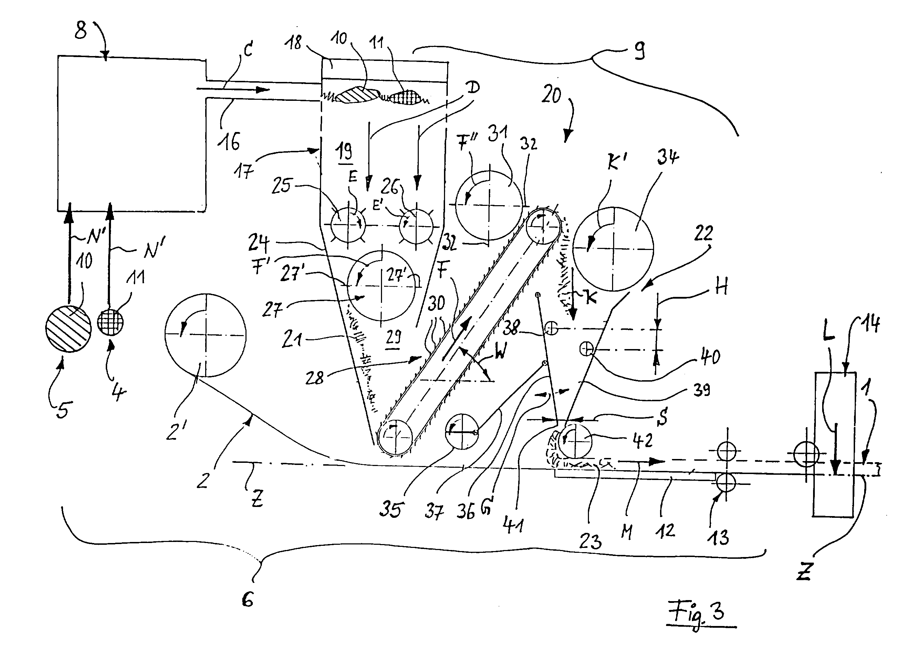

Bei der Herstellung der erfindungsgemäßenTeppichware 1 wird vor dem Nadelvorgang ein neuer Verfahrensschritt vorgesehen, während dem ein aus ungekrempelten und im wesentlichen nur aufgelockerten Faserflocken bestehender Flockenverbundvlies 23 (Fig. 3) hergestellt wird. Dieser wird zu einer definiert vorgepreßten Vliesdecklage geformt und anschließend mit dem Grundgewebe 2 vernadelt (Nadelmaschine 14). In Fig. 3 ist eine Ausführung einer insgesamt mit 6 bezeichneten Verarbeitungsanlage dargestellt, an der die wesentlichen Verfahrensschritte bei der Herstellung der erfindungsgemäßen Teppichware 1 bzw. der für diese vorgesehenen Decklage 3 in Form des Flockenverbundvlieses 23 deutlich werden.

Ausgehend von der linken Seite in Fig. 3 sind die beiden schematisch dargestellten Faserstrukturen 4 und 5 gezeigt. Diese können in Form von Faserballen einer nicht näher dargestellten Zerreißmaschine zugeführt und aus dieser in Form der Faserflocken 10 und 11 in ein allgemein mit 8 bezeichnetes Mischwerk überführt werden (Pfeil N, N'). Ausgehend von diesem Mischwerk 8 weist die Verarbeitungsanlage 6 eine insgesamt mit 9 bezeichnete Verteilvorrichtung auf. Unterhalb deren Baugruppen wird das von einem Ballen 2' abrollende, bahnförmige Grundgewebe 2 zugeführt (Vorschubebene: Z), so daß an einem auslaßseitigen Ende der Verteilvorrichtung 9 die in Form der Flocken 10 und 11 zugeführten Faserstrukturen als der Flockverbundvlies 23 ausgefördert und auf das Grundgewebe 1 im Bereich eines Auflagetisches 12 auflegbar sind.

Dieses nunmehr zweilagige Flächengebilde wird danach durch eine Rollenförderung 13 in einer Förderrichtung M der insgesamt mit 14 bezeichneten Nadelmaschine zugeführt und in dieser in einer Bearbeitungsrichtung L mittels nicht näher dargestellter Nadelbarren senkrecht zur Vorschubebene Z so bearbeitet, daß auslaßseitig an der Nadelmaschine 14 die Teppichware 1 entnehmbar ist.

Das in Form der Flocken 10 und 11 im Mischwerk 8 aufgelockerte Ausgangsmaterial wird mittels eines Zuführrohres 16 in eine Verteilkammer 17 der Vorrichtung 9 verlagert, wozu ein an deren Oberseite vorgesehener Lüfter 18 vorgesehen sein kann. Die in einer Pfeilrichtung C verlagerten Faserflocken 10, 11 gelangen in einer als loser Verbund dargestellten Konsistenz oberseitig in einen Sammelraum 19 und werden in einer vertikalen Pfeilrichtung D in diesem Sammelraum 19 nach unten verlagert.

Diese Verteilkammer 17 wirkt mit mehreren Baugruppen einer insgesamt mit 20 bezeichneten Entnahmeeinheit zusammen, mittels der auslaßseitig der Verteilkammer 17 ein die aufgelockerten und dosiert weitergeförderten Flocken 10 und 11 enthaltender Flockenverbund 21 entnehmbar, dieser in kontinuierlichem Durchlauf einem nachgeordneten Rüttelschacht 22 zuführbar und von diesem auslaßseitig der verdichtete Flockenverbund 21 in Form des Flockenverbundvlieses 23 auf die Gewebebahn 2 auflegbar ist.

Mit diesem Aufbau der Verteilvorrichtung 9 mit der Verteilkammer 17 und der Entnahmeeinheit 20 ist der prinzipielle Durchlauf der zumindest zwei Faserstrukturen in Form der Faserflocken 10, 11 enthaltenden Materialbahn und deren Aufbereitung zu dem Flockenverbundvlies 23 veranschaulicht.

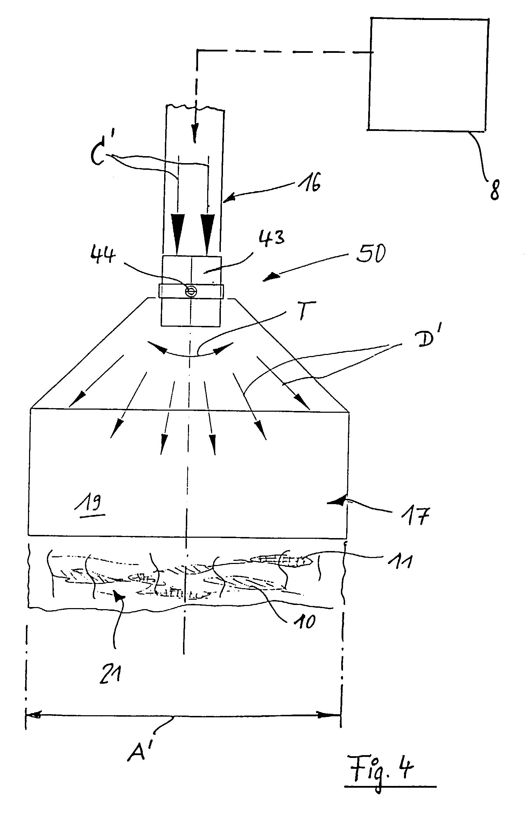

Für die Zuführung der Faserflocken 10 und 11 in die Verteilkammer 17 kann auch ein in Fig. 4 näher veranschaulichter Schwenkverteiler 50 im Bereich des Zuführrohres 16 vorgesehen sein (in Fig. 3 nicht dargestellt). In vorteilhafter Ausführung der Verteilvorrichtung 9 werden im Sammelraum 19 die Faserflokken 10, 11 in der vertikalen Pfeilrichtung D zu zwei sich im Trichterbereich 24 der Verteilkammer 17 erstreckenden Entnahmewalzen 25, 26 hin verlagert, wobei diese einen gegenläufigen Drehsinn E, E' aufweisen und mit einer diese untergreifenden Schlagwalze 27 zusammenwirken. Diese Schlagwalze 27 weist zwei um 180° versetzt am Umfang angeordnete Schlagstreben 27' auf, so daß eine kontinuierliche Mitnahme (Drehrichtung: Pfeil F') des durch die Entnahmewalzen 25 und 26 geförderten Materiales 21 möglich ist. Aus dem Trichterbereich 24 der Verteilkammer 17 heraus wird der bahnförmig aufbereitete und aufgelockerte Flockenverbund 21 einem an sich bekannten Steiglattentuch 28 zugeführt, das in einer einen Neigungswinkel W aufweisenden Einbaulage den Auslaß 29 der Verteilkammer 17 untergreift.

Das Steiglattentuch 28 nimmt den Flockenverbund 21 durch jeweilige Greifteile 30 auf und fördert den Flockenverbund 21 in einer Pfeilrichtung F in eine obere Abwurfposition, die durch den oberen Umlenkpunkt der nach Art einer Förderkette bewegten Greifteile 30 definiert ist. Im Nahbereich dieses oberen Endes des Steiglattentuches 28 ist zusätzlich eine in Förderrichtung F" drehende Anschlagwalze 31 vorgesehen, so daß mit deren Mitnahmeleisten 32 das bereits eine definierte Auflockerung und miteinander verzahnte Flocken aufweisende Material rückseitig im Flockenverbund 21 erfaßt und weiterbewegt wird. Gleichzeitig werden im Bereich der Anschlagwalze 31 überflüssige, lockere Faserteile von der Oberseite des Verbundes 21 abgenommen und in Richtung der Verteilkammer 17 zurückgeworfen.

Der bis in den Bereich des oberen Umlenkpunktes des Steiglattentuches 28 verlagerte Flockenverbund 21 kann in Abhängigkeit seines Verbund-Flächengewichtes und der jeweiligen Fördergeschwindigkeit (Pfeil F) unter Schwerkraft in den Rüttelschacht 22 weiterbefördert werden. In der dargestellten Ausführung wird der Flockverbund 21 durch eine nahe dem oberen Ende des Steiglattentuches 28 rotierende Abnehmerwalze 34 (Pfeil K) erfaßt und so umgelenkt, daß eine zielgerichtete Einförderung in den sich trichterförmig verengenden Rüttelschacht 22 erreicht wird (Pfeil K).

Im Bereich dieses Rüttelschachtes 22 wird aus dem bisher erzeugten Flockenverbund 21 der für die nachfolgende Bearbeitung optimale Flockenverbundvlies 23 geformt. Dazu weist der Rüttelschacht 22 eine mit einem Antrieb 25 bewegliche Schubwand 36 auf, die über ein Gestänge 37 so mit einem regelbaren Antrieb 35 verbunden ist, daß eine pendelnde Zwangsbewegung gemäß Pfeil G im Trichterbereich des Rüttelschachtes 22 erzeugt und diese Rüttelbewegung der Abwärtsbewegung des Verbundes 21 überlagert wird.

Durch dieses Zusammenwirken des Rüttelschachtes 22 mit der beweglichen Schubwand 36 und der gegenüberliegenden Trichterwand 39 wird eine optimale Verdichtung der beiden weitgehend als Flocken in dem Verbund 21 verbliebenen Faserstrukturen 10 und 11 erreicht. Zur weiteren Verbesserung und Optimierung dieses Verdichtungsvorganges können in den Rüttelschacht 22 zwei mit einem Höhenabstand H angeordnete Walzenkörper 38, 40 in Form loser Walzen eingebracht sein, mit denen entsprechend der Konsistenz der zugeführten Materialien und deren beabsichtigter Verteilung im Endprodukt die Verdichtung des Flockenverbundes 21 dadurch gesteuert wird, daß der Höhenabstand H weiter oder enger eingestellt ist. Damit wirkt insbesondere ein Brems- und Stauchvorgang auf den sich bildenden Flockenverbundvlies 23 ein und dieser ist danach ohne Dichteschwankungen als eine in ihrem Gewicht und ihrer Höhe gleichmäßige Bahnware verfügbar.

Im Bereich seiner unteren Auslaßöffnung 41 weist der Rüttelschacht 22 einen variablen Auslaßspalt S auf, so daß in diesem Bereich durch eine Variation des Spaltmaßes (Bewegung gemäß Pfeil G) eine optimale Steuerung der Materialverdichtung unmittelbar vor dem Auflegen des Flockenverbundvlieses 23 auf die Gewebebahn 2 erreicht wird. Insbesondere ist im Nahbereich des Spaltes S unterhalb des Rüttelschachtes 22 eine den Flockenverbundvlies 23 auf die Gewebebahn 2 aufdrückende Riffelwalze 42 vorgesehen.

Die Verteilvorrichtung 9 weist eine nicht näher dargestellte Steuerungsautomatik auf, mit der die Dreh- und Fördergeschwindigkeiten insbesondere im Bereich der dargestellten Förderwalzen 25, 26, 27, 31, 34 und des Steiglattentuches 28 verfahrensspezifisch geregelt und eingestellt werden können, so daß entsprechend den zur Verarbeitung zugeführten Kunststoff- und/oder Naturfasern, deren Konsistenz und der vorgesehenen Strukturverteilung in der Teppichware 1 jeweils eine optimale Verzahnung, Auflockerung und/oder Verdichtung der Faserflocken 10 und 11 erreicht werden/wird. Bei diesem Verfahrensablauf bleibt die für die Strukturerzeugung in der Teppichware 1 wesentliche Verteilung der Faserflocken 10 und 11 in dem Flockenverbundvlies 23 erhalten.

In aufwendigen Versuchen wurden verschiedene Verfahrensvarianten getestet, wobei insbesondere auch die Steuerung im Bereich des Antriebes 35 für die Schubwand 36 und die geometrischen Verhältnisse im Bereich des Rüttelschachtes 22 (Stellung der Walzen 38, 40) die Konsistenz des Flockenverbundvlieses 23 wesentlich beeinflussen. Im Bereich der beiden als lose Walzen angeordneten Walzen 38 und 40 im Rüttelschacht 22 ist insbesondere eine variable Verdichtung durch die Höhenverstellung H erreichbar.

Die in Fig. 4 in vergrößerter Ausschnittsdarstellung gezeigte Verteilervorrichtung 50 ist im Bereich der Förderleitung 16 mit einem schwenkbaren Strahlrohr 43 versehen, das durch eine Gelenkabstützung 44 in einer Schwenkrichtung T verlagerbar ist. Damit kann die aus dem Mischwerk 8 in Pfeilrichtung C' zugeführte Materiallage mit den Flocken 10 und 11 (Fig. 3) in kontinuierlich wechselnden Auswurfrichtungen D' so weitergeführt werden, daß mit geringem Aufwand eine aufgelockerte und die Flockenstruktur erhaltende Materialschichtung in der Verteilkammer 17 erreicht ist und dieser lose Flockenverbund 21 mit einer Bahnbreite A' durch den vorbeschriebenen Verfahrensablauf zu dem Nadelfilz-Teppich 1 weiterverarbeitbar ist.

## Patentansprüche

1. Teppichware in Form eines Nadelfilzes, die ein Grundgewebe (2) und eine mit diesem vernadelte Decklage (3) aufweist, **dadurch gekennzeichnet, daß** als Decklage (3) eine ungekrempelte und zumindest zwei gemischte Faserstrukturen (4, 5) aufweisende Vlieslage vorgesehen ist.

2. Teppichware nach Anspruch 1, **dadurch gekennzeichnet, daß** die Faserstrukturen (4, 5) jeweils teilflächig und mit fließend unregelmäßiger Umrißkontur oberseitig sichtbar im Nadelfilz (1) verteilt sind, derart, daß dieser zumindest zwei als unterschiedliche Schattierungen sichtbare Musterbereiche aufweist.

3. Teppichware nach Anspruch 1 oder 2, **dadurch gekennzeichnet, daß** die zumindest zwei Faserstrukturen (4, 5) aus Fasern unterschiedlicher Farbe gebildet sind.

4. Teppichware nach einem der Ansprüche 1 bis 3, **dadurch gekennzeichnet, daß** die Faserstrukturen (4, 5) aus unterschiedlichem Fasermaterial, vorzugsweise Kunststoff- und/oder Naturfasern, bestehen.

5. Verfahren zur Herstellung einer Teppichware, insbesondere eines Nadelfilzes nach einem der Ansprüche 1 bis 4, bei dem ein textiles Flächengebilde in Form eines Grundgewebes (2), eines Trägervlieses o. dgl. mit einer zumindest zwei gemischte Faserstrukturen (4, 5) aufweisenden Vliesdecklage (3) durch eine vertikal zur Vorschubebene (Z) des Grundgewebes (2) erfolgende Nadelbearbeitung (L) verbunden wird, **dadurch gekennzeichnet, daß** ein aus ungekrempelten und aufgelockert gemischten Faserflocken (10, 11) bestehender Flockenverbundvlies (23) als die Vliesdecklage geformt und anschließend mit dem Grundgewebe (2) vernadelt wird.

6. Verfahren nach Anspruch 5, **dadurch gekennzeichnet, daß** der Flockenverbundvlies (23) unmittelbar vor dem Vernadeln aufgelockert und bahnförmig gepreßt wird.

7. Verfahren nach Anspruch 5 oder 6, **dadurch gekennzeichnet, daß** der Flockenverbundvlies (23) aus mehr als zwei Strukturen von Faserflocken (10, 11) gemischt wird.

8. Verfahren nach einem der Ansprüche 5 bis 7, **dadurch gekennzeichnet, daß** die durch Auflockern von Faserballen erzeugten Faserflocken (10, 11) unmittelbar nach dem Mischvorgang als Zwischenprodukt (Flockenverbund 21) einer Auflockerung und Verdichtung zugeführt und danach diese Faserflocken (10, 11) als Flockenverbundvlies (23) mit einem gleichmäßigen Flächengewicht auf das Grundgewebe (2) aufgelegt werden.

9. Verfahren nach einem der Ansprüche 5 bis 8, **dadurch gekennzeichnet, daß** der Flockenverbundvlies (23) kontinuierlich über die gesamte Breite (A') dem bahnförmigen Grundgewebe (2) zugeführt wird.

10. Verfahren nach einem der Ansprüche 5 bis 9, **dadurch gekennzeichnet, daß** die Faserflocken (10, 11) jeweils aus unterschiedlich gekräuselten, gefärbten, verdichteten und/oder gestreckten Kunststoff- oder Naturfasern gebildet werden.

11. Verfahren nach einem der Ansprüche 5 bis 10, **dadurch gekennzeichnet, daß** die in dem Flockenverbundvlies (23) befindlichen und aus den zumindest zwei Faserstrukturen gemischten Faserflocken (10, 11) großflächig verteilt werden und nach dieser Faserflockenverteilung mittels der Nadelbearbeitung unterschiedlich dimensionierte Farbschattierungen auf dem Nadelfilz (1) fixiert werden.

12. Verfahren nach einem der Ansprüche 5 bis 11, **dadurch gekennzeichnet, daß** das Flächengewicht und die Höhe des zur Teppichware (1) verfilzbaren Flockenverbundvlieses (23) im Bereich der Faserstrukturen (4, 5) gleichmäßig ausgebildet werden und während des Nadelvorganges eine weitgehend gleichmäßige Oberfläche gebildet wird.

13. Verarbeitungsanlage zur Herstellung einer Teppichware, insbesondere eines Nadelfilzes, nach einem der Ansprüche 1 bis 12, mit der aus einem Mischwerk entnommene Faserflocken (10, 11) in ihrer Faserstruktur zu einer weitgehend gleichmäßigen Vliesdecklage aufbereitbar, bahnförmig in eine Nadelvorrichtung (14) einführbar und mit einem Grundgewebe (2) vernadelbar sind, **dadurch gekennzeichnet, daß** die Anlage mit einer an das Mischwerk (8) angeschlossenen Verteilvorrichtung (9) versehen ist, mit der eine im Mischwerk (8) erzeugte Flockenverteilung der Faserflocken (10, 11) auflockerbar ist, derart, daß das Fasermaterial als ein loser Flockenverbundvlies (23) mittels der Verteilvorrichtung (9) auf das bahnförmig zugeführte Grundgewebe (2) auflegbar und dieses zweilagige Band der Nadelvorrichtung (14) zuführbar ist.

14. Verteilvorrichtung nach Anspruch 13, **dadurch gekennzeichnet, daß** diese eine die Faserflocken (10, 11) oberseitig in einem Sammelraum (19) mit vertikaler Fallrichtung (D) aufnehmende Verteilkammer (17) aufweist, dieser auslaßseitig eine einen bahnförmig verteilten Flockenverbund (21) ausfördernde Entnahmeeinheit (20) zugeordnet ist, mittels dieser der Flockenverbund (21) einer oberen Einführöffnung eines Rüttelschachtes (22) zuführbar ist und an dessen bodenseitigem Auslaßspalt (S) der Flockenverbundvlies (23) auf die Gewebebahn (2) auflegbar ist.

15. Verteilvorrichtung nach Anspruch 13 oder 14, **dadurch gekennzeichnet, daß** die aus der Mischkammer (8) durch ein Zuführrohr (16) und einen Schwenkverteiler (50) in die Verteilkammer (17) zugeführten Faserflocken (10, 11) im Bereich des Sammelraumes (19) zu zwei mit der Entnahmeeinheit (20) zusammenwirkenden Entnahmewalzen (25, 26) hin verlagerbar sind, mittels einer diese untergreifenden Schlagwalze (27) die Faserflocken als Verbund (21) einem Entnahmetrichter (24) zuführbar sind und aus diesem der bahnförmig aufgelockerte Flockenverbund (21) ausförderbar ist.

16. Verteilvorrichtung nach einem der Ansprüche 13 bis 15, **dadurch gekennzeichnet, daß** die Entnahmeeinheit (20) unterhalb des Entnahmetrichters (24) ein den Flockenverbund (21) in eine obere Abwurfposition verlagerndes Steiglattentuch (28) aufweist, an dessen oberen Ende eine in Förderrichtung (F") drehende Anschlagwalze (31) vorgesehen ist.

17. Verteilvorrichtung nach einem der Ansprüche 13 bis 16, **dadurch gekennzeichnet, daß** die Entnahmeeinheit (20) im Bereich des Steiglattentuches (28) eine den losen Flockenverbund (21) in Abwurfrichtung übernehmende Abnehmerwalze (34) aufweist, unter der ein aus dem Flockenverbund (21) den Flokkenbundvlies (23) formender Rüttelschacht (22) vorgesehen ist.

18. Verteilvorrichtung nach einem der Ansprüche 13 bis 17, **dadurch gekennzeichnet, daß** die Entnahmeeinheit (20) im Bereich des Rüttelschachtes (22) zumindest eine mit einem Antrieb (35) bewegliche Schubwand (36) aufweist, mit der der Flockenverbundvlies (23) preßbar und durch einen veränderbaren Bodenspalt (S) ausförderbar ist.

19. Verteilvorrichtung nach Anspruch 17 oder 18, **dadurch gekennzeichnet, daß** in dem Rüttelschacht (22) zwei in unterschiedlicher Höhenlage (H) zueinander positionierbare Walzenkörper (38, 40) im Nahbereich der beweglichen Schubwand (36) bzw. der gegenüberliegenden Trichterwand (39) vorgesehen sind.

20. Verteilvorrichtung nach einem der Ansprüche 13 bis 19, **dadurch gekennzeichnet, daß** die Entnahmeeinheit (20) im Nahbereich des Bodenspaltes (S) am Rüttelschacht (22) eine den Flockenverbund-Vlies (23) erfassende und diesen auf die Gewebebahn (2) aufdrückende Riffelwalze (42) aufweist.
